# EUROPEAN PATENT APPLICATION

(11) **EP 0 606 827 A1**
(43) Date of publication of application: **20.07.1994**
(21) Application number: 93830004.3
(22) Date of filing: 12.01.1993
(51) Int. Cl.: B23D 37/10, B23D 41/08, H01B 3/42, C08L 67/02, C08K 5/29

(54) **Vertical internal push broaching machine**

(71) Applicant: OFFICINE MECCANICHE VARINELLI S.p.A., I-20043 Arcore (Milano) (IT)
(72) Inventor: Varinelli, Antonio, I-20125 Milano (IT); Varinelli, Marco, I-20125 Milano (IT); Bianco, Oreste, I-10040 Casellette (Torino) (IT)
(74) Representative: Buzzi, Franco

(57) **Abstract**

A vertical internal push broaching machine having an upper slide (12) and a lower slide (13) provided with respective holding means (15,26) for releasably retaining opposite end portions of at least one vertical broach (11) and vertically displaceable along guide elements (14) by means of a first and a second electric motor (17,33). The first electric motor (17) actuates displacement of the upper slide (12) by means of a reduction gear (19) and a vertical rack (21) and pinion (20) transmission.

## Description

The present invention is related to vertical internal push broaching machines.

More particularly, the invention is directed to a push broaching machine of the type comprising a support framework having a horizontal platform provided with means for the positioning of the workpieces to be broached, an upper slide and a lower slide vertically movable respectively above and below the horizontal platform and provided with respective holding means for releasably retaining opposite end portions of at least one vertical broach adapted to be pushed from above downwardly through a workpiece positioned on the said horizontal platform, vertical slidable guide means of the said upper and lower slides, first actuator means for operating the displacement of the upper slide and, in the engaged condition of the broach relative to the said holding means of both slides, the corresponding vertical displacement of the lower slide along the said guide means, and second actuator means for operating the displacement of the lower slide relative to the upper slide along the said guide means, in the disengaged condition of the broach relative to the holding means of at least one of the two slides.

As it is well known in the art the joined push stroke of the two slides rigidly connected between each other, allows performing the operative cycle of internal machining of the workpiece, while the separate displacement of the two slides permits clearing the access to the horizontal platform for introduction of the workpiece to be machined and removal of the machined workpiece, as well as substituting the broach for sharpening thereof.

Traditionally the vertical push broaching machines of the above-mentioned type employ, for actuating the displacement of the slides and in particular of the upper one (and thus the operative push stroke of the broach or broaches through the piece or pieces), a hydraulic actuator which requires the presence, aside the broaching machine, of a complex and huge hydraulic unit, with associated auxiliary equipment (hoses, connectors, solenoid valve groups, etc.).

Hydraulic operation further involves problems connected to the control of the acceleration and deceleration paths as well as of the working speed of the broach or broaches, the constancy of which is also negatively affected by variations of the hydraulic fluid temperature.

The object of the present invention is to provide a vertical push broaching machine of the above-mentioned type which allows overcoming the said drawbacks.

According to the invention, such an object is achieved by virtue of the fact that the said first actuator means for operating the upper slide comprise an electric motor supported by the top of the framework and to which a reduction gear and a rack and pinion transmission are operatively associated, wherein the said rack is vertically and centrally secured to the upper slide.

Conveniently, the said actuator means for operating displacement of the lower slide relative to the upper slide comprise a second electric motor supported by the upper slide, and a pair of vertical bars fixed inferiorly to the lower slide and slidable superiorly through the upper slide by means of a rack and pinion system operated by the said second electric motor.

Accordingly, the broaching machine following the invention is nearly entirely electro-mechanically operated which, further to appreciably simplifying the manufacture and considerably reducing the overall dimensions, facilitates control of the two slides as far as the acceleration and deceleration paths are concerned, as well as the broaching speed, even making such a control more versatile in respect of the adjustments as a function of the length of the broach or broaches.

The two electric motors are conveniently of the brushless type, which guarantees constant performances even at high speed, along with low operating noise and reduced dimensions, as well as high but constantly timely checked acceleration and deceleration.

In order to ensure the necessary safety in case of interruption of electrical feed during high speed working phases, an electro-magnetic security brake is conveniently associated to the first electric motor. To such extent the machine can also be equipped with an auxiliary locking device for the emergency clamping of the upper slide, as well as with additional safety devices applied to the lower slide.

The invention will now be disclosed in detail with reference to the annexed drawings, provided purely by way of non limiting example, wherein:
figure 1 is a front elevation and partially sectioned view of a vertical internal push broaching machine according to the invention,
figure 2 is a vertically partially sectioned view along line II-II of figure 1,
figure 3 is a horizontally sectioned and enlarged view along line III-III of figure 2,
figure 4 is a horizontally sectioned and enlarged view along line IV-IV of figure 2,
figure 5 is a horizontally sectioned and enlarged view along line V-V of figure 2, and
figure 6, 7, 8, 9, 10 show in a simplyfied and partial way the broaching machine according to the invention in subsequent different working phases.

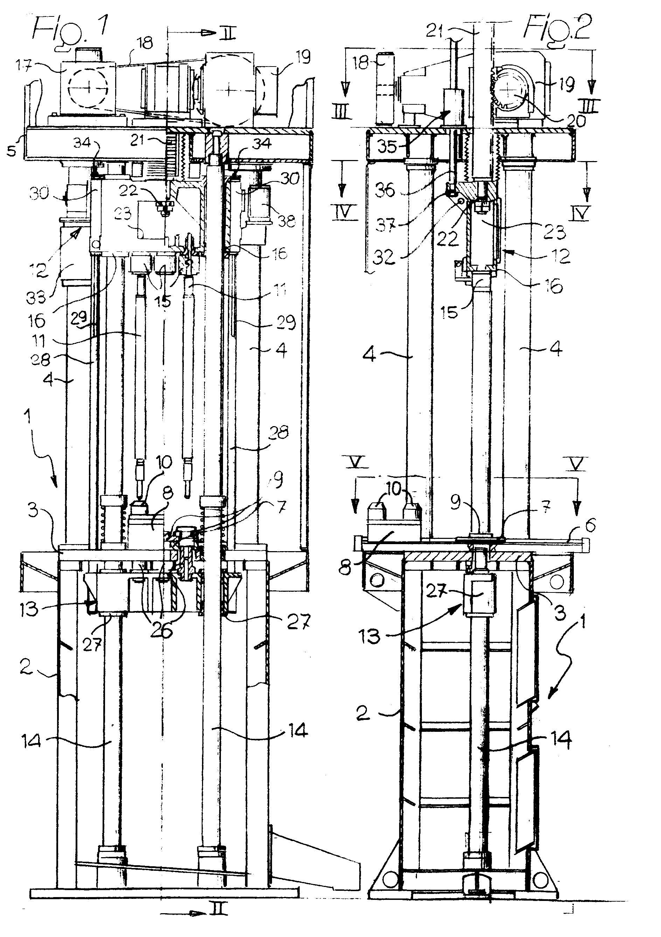

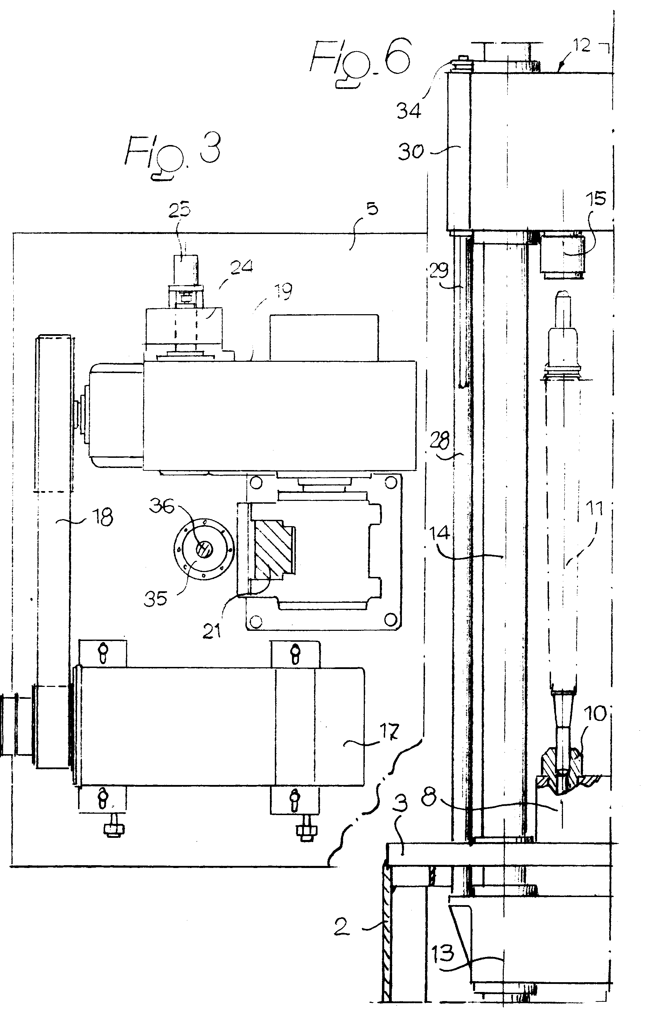

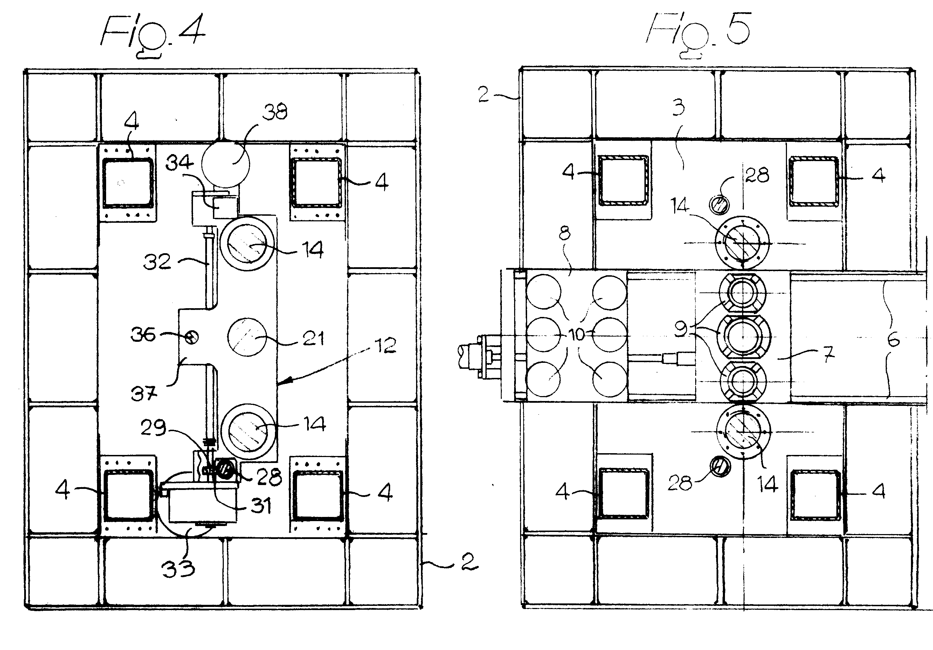

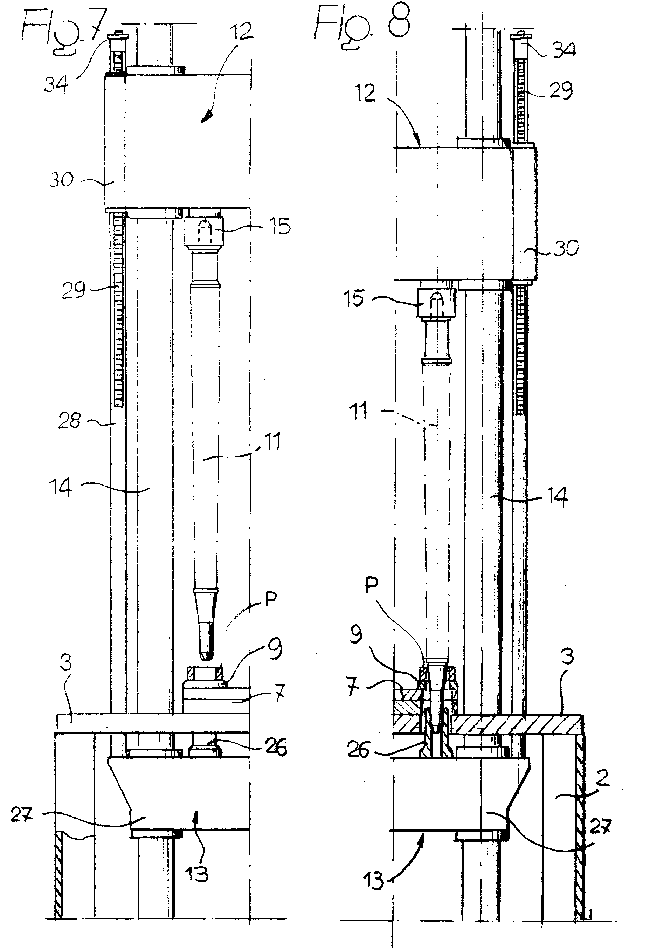

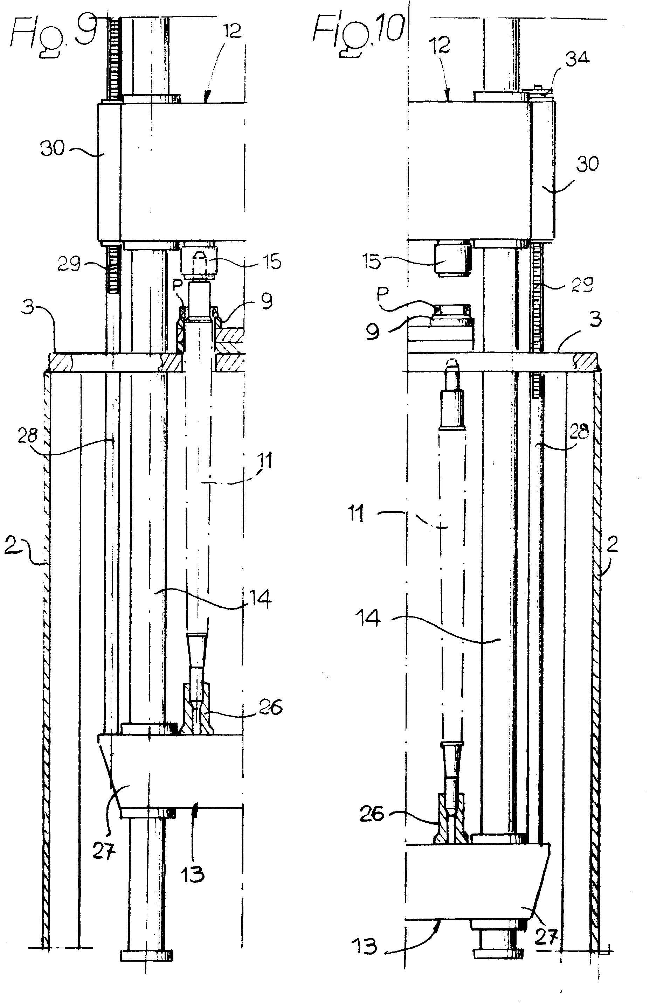

Referring initially to figures 1 through 5, the broaching machine according to the invention comprises a support framework 1, formed by a base generally indicated with 2 and carrying a horizontal platform 3 above which four tubular quadrangular uprights 4 extend, on the top of which a horizontal support structure 5 is arranged.

The horizontal platform 3 centrally bears a pair of horizontal guides 6 along which a workpiece holder plate 7 and a broach holder group 8 are slidably mounted, in a way known per se. Also in a way known per se, the workpiece holder plate 7 is provided with clamping members 9 (three in the shown example) for locking normally annular workpieces P to be internally broached, for instance coupling sleeves for motor vehicle gearboxes. The broach holder group 8, which besides being linearly movable along the guides 6 is also rotatable around a central vertical axis, carries two sets of support elements 10, whose number is same as that of the workpiece holder members 9, for supporting respective broaches 11 in a vertical condition.

Reference numerals 12 and 13 designate respectively an upper slide and a lower slide vertically movable respectively above and below the horizontal platform 3 along a pair of cylindrical vertical guides 14, which extend below the support structure 5 for the entire heigth of the broaching machine.

The upper slide 12 supports inferiorly a group of locking sleeves 15 (three in the illustrated example) for the disengageable holding, in a conventional way by means of an electric actuator 38, of the upper end portions of the broaches 11, and is laterally formed with two tubular parts 16 slidably engaged along the two vertical guides 14.

According to the invention, the vertical displacement of the upper slide 12 along the guides 14 is operated by means of an electrical motor 17, supported by the upper plate 5, which drives a vertical rack 21 through an endless-belt transmission 18, a reduction gear 19 with parallel-axis hardened and grinded gear wheels, and a helical gear wheel 20 (figure 2). The rack 21 is guided through the upper plate 5 and is secured in 22 to a central hollow portion 23 of the upper slide 12.

An electro-magnetic brake 24 for the emergency stop of the upper slide 12 in case of interruption of the electrical feed, and an encoder 25 for the speed control of said upper slide 12 are operatively associated with the reduction gear 19.

The lower slide 13 is in turn provided superiorly with bushes 26, coaxially aligned with the sleeves 15 of the upper slide 12, for the insertion of the lower ends of the broaches 11, and is formed laterally with two tubular parts 27 for the slidable coupling thereof with the two vertical guides 14.

Aside the tubular parts 27, the lower slide 13 is fixed to the lower ends of two vertical bars 28 whose upper portions, formed with respective axial racks 29, are slidably mounted through two lateral tubular bosses 30 of the upper slide 12. The two racks 29 are operated by means of respective toothed wheels, only one of which is shown at 31 in figure 4, carried by a transverse shaft 32 rotatably supported by the upper slide 12 and driven in rotation by a second electric motor 32 also carried by the upper slide 12.

The top ends of the two vertical rods 28, protruding above the upper slide 12, are provided with respective terminal stop plates 34.

Reference numeral 35 indicates a hydraulic safety locking device of the upper slide 12, of conventional type, carried by the upper plate 5 and to which a rod 36 connected to a central bracket 37 of said upper slide 12 is associated.

The electric motor 17 for operating the upper slide 12 and the electric motor 33 for operating the lower slide 13 are both of the brushless type, and are connected to an electronic control circuit (not shown in the drawings but within the knowledge of the man skilled in the art) by means of which the acceleration and deceleration paths and the translation speed of the broaches are controlled during the push broaching operation of the workpieces. The speed is furthermore variable, both as a function of the length of the broaches and as a function of the kind of machining (roughing, finishing), for instance between 9-10 m/l' and 80 m/l'.

Referring to figures 6 through 10, the working cycle of the broaching machine according to the invention will now be described.

It must be preliminarly pointed out that in the vertical internal push broaching performed by the machine according to the invention, the operative displacement of the broaches 11 is accomplished by means of a joined movement of the upper slide 12 and of the lower slide 13 from above downwardly, with the broaches 11 held at their upper and lower ends by the holding sleeves 15 and by the bushes 16, respectively, through operation of the electric motor 17. Instead, when the broaches 11 are free in correspondence of at least one of their ends relative to the upper slide 12 or, respectively, to the lower slide 13, the slides can be displaced one independently of the other: the upper slide 12 by means of operation of the electric motor 17, and the lower slide 13 by means of operation of the electric motor 33.

At the beginning of the cycle (figure 6) the broach holder group 8 is shifted along the guides 6 so as to arrange a tern of broaches 11 in a vertical alignment with the locking sleeves 15 of the upper slide 12.

By means of the electric motor 17 the upper slide 12 is then lowered (while the lower slide 13 is kept stationary) until engaging and clamping the upper ends of the broaches 11 within the sleeves 15, thus allowing the disengagement of the lower ends thereof from the support elements 10 and the subsequent removal of the group 8 away from the working area, in correspondence of which is then moved the workpiece holder plate 7, with a tern of anular workpieces P to be broached held by the respective members 9 (figure 7).

The upper slide 12 is subsequently displaced downwardly, still maintaining the lower slide 13 in a stationary condition, until engagement of the lower ends of the broaches 11 within the bushes 26 (figure 8).

At this point the motor 17 operates the working stroke of the upper slide 12 downwardly, which pushes the broaches 11 through the cavities of the workpieces P, simultaneously displacing downwardly the lower slide 13 (figure 9).

At the end of the broaching stroke the upper ends of the broaches 11 are released from the clamping sleeves 15 of the upper slide 12 and the lower slide 13 is further displaced downwardly, by means of the electric motor 33, so as to set free the broached workpieces P and allow removal thereof from the machine in order to proceed then with a new broaching cycle.

Naturally, the details of construction and the embodiments can be varied with respect to what has been described and illustrated, without departing from the scope of the present invention such as defined in the appended claims.

## Claims

1. A vertical internal push broaching machine, comprising a support framework (1) having a horizontal platform (3) provided with means (7) for positioning the workpieces (P) to be broached, an upper slide (12) and a lower slide (13) vertically movable respectively above and below the horizontal platform (3) and provided with respective holding means (15, 16) for releasably retaining opposite end portions of at least one vertical broach (11) adapted to be pushed from above downwardly through a workpiece (P) positioned on the said horizontal platform (3), vertical slidable guide means (14) of the said upper and lower slides (12, 13), first actuator means (17) for operating displacement of the upper slide (12) and, in the engaged condition of the broach (11) relative to the said holding means (15, 26) of both slides (12, 13), corresponding vertical displacement of the lower slide (13) along the said guide means (14), and second actuator means (33) for operating displacement of the lower slide (13) relative to the upper slide (12) along the said guide means (14), in the disengaged condition of the broach (11) relative to the holding means (15, 26) of at least one of the two slides (12, 13), characterized in that the said first actuator means comprise an electric motor (17) supported at the top (5) of the framework (1) and to which a reduction gear (19) and a rack (21) and pinion (20) transmission are operatively associated, wherein the said rack (21) is vertically and centrally secured to the upper slide (12).

2. A push broaching machine according to claim 1, characterized in that the said second actuator means comprise a second electric motor (33) carried by the upper slide (12) and a pair of vertical bars (28) fixed inferiorly to the lower slide (13) and slidable superiorly through the upper slide (12) by means of a rack (31) and pinion (29) system operated by the said second electric motor (33).

3. A push broaching machine according to claim 2, characterized in that the said electric motor (17) and the said second electric motor (33) are of the brushless type and electronically controlled.

4. A push broaching machine according to claim 1, characterized in that an electro-magnetic safety brake (24) is associated to the said electric motor (17).

5. A push broaching machine according to claim 4, characterized in that an auxiliary emergency locking device (35) is further associated to the said upper slide (12).

6. A push broaching machine according to claim 1, characterized in that an endless belt transmission (19) is interposed between the electric motor (17) operating the upper slide (12) and the said reduction gear (19).
